# NEW EUROPEAN PATENT SPECIFICATION

(11) **EP 0 324 501 B2**
(45) Date of publication and mention of the opposition decision: **03.05.1995**
(45) Mention of the grant of the patent: 21.11.1991
(21) Application number: 89100569.6
(22) Date of filing: 13.01.1989
(51) Int. Cl.: C04B 18/16, C04B 28/02

(54) **Method for stabilizing concrete residues**
Verfahren zur Stabilisierung von Beton-Rückständen
Procédé pour la stabilisation de résidus de béton

(30) Priority: 14.01.1988 US 144886
(43) Date of publication of application: 19.07.1989
(73) Proprietor: SANDOZ AG, 4002 Basel (CH); SANDOZ-PATENT-GMBH, 79539 Lörrach (DE); SANDOZ-ERFINDUNGEN Verwaltungsgesellschaft m.b.H., 1235 Wien (AT)
(72) Inventor: Bobrowski, Gregory Stanley, Chagrin Falls Ohio 44022 (US); Ryan, Robert Joseph, Maple Hights Ohio 44137 (US)

(56) References cited:
- EP-A- 0 177 308
- DE-A- 2 325 739
- DE-A- 3 727 907
- GB-A- 2 194 528
- JP-A- 535 222
- JP-A- 6 140 854
- JP-A-55 149 153
- US-A- 2 783 157
- US-A- 3 997 434
- CHEMICAL ABSTRACTS, vol. 94, no. 22, June 1981, page 303, abstract no. 179611r, Columbus, Ohio, US
- CHEMICAL ABSTRACTS, vol. 105, no. 9, November 1986, page 313, abstract no. 157897g, Columbus, Ohio, US
- CHEMICAL ABSTRACTS, vol. 105, no. 2, July 1986, page 294, abstract no. 11015w, Columbus, Ohio, US
- NRMCA Technical Infomation letter no. 276 (06/05/1970) (National Ready Mix Concrete Association, Silver Spring, MD, US)
- Derwent abstract AN 88-045735/07
- Derwent abstract AN 87-233215/33
- Derwent abstract AN 86-077748/12
- Derwent abstract AN 76 29301x/16
- A.M. Neville: Properties of Concrete, 3rd Ed., 1981, Longman Scientific, US., p. 106, 107
- Untersuchungsbericht (Test Report) EMPA No. 56238/39, Eidgenössische Materialprüfungs- und Versuchsanstalt für Industrie, Bauwesen und Gewerbe, to: Kaspar Winkler & Co.; (1969)
- Cement & Concrete no. 385, March 1979, Cement Assoc. of Japan, p. 6ff., J. Murata et al.
- Master Builders, "Delvo System" for the stabilization of concrete wash water, Form Delvo 4, printed in USA 3/88

## Description

This invention relates to a process for the recuperation and reuse of unused concrete residues in a Ready-Mix truck drum.

It is the present practice in the Ready-Mix concrete industry to wash-out any concrete residue left in a Ready-Mix truck at the end of the day, to prevent the concrete residue from hardening in the truck drum. This practice is time consuming and requires slurry pits to retain the spent concrete. Furthermore, it results in high hauling costs to dispose of the spent concrete. This procedure is both economically and environmentally undesirable and there is a need for a method to eliminate the present wasteful wash-out procedure.

It was found that concrete residues in a Ready-Mix truck can be recuperated by the addition of a stabilizing composition to the clean-up slurry water in the truck drum. Stabilization of the slurry-water prevents the concrete residue from hardening in the truck drum.

The process of this invention comprises a process for the recuperation and reuse of unused concrete residues in a ready-mix truck drum, comprising the addition thereto of clean-up water to form a slurry, there being added to the drum, either directly or in the form of a solution in the clean-up water, a stabilizing agent.

The stabilized slurry can be mixed with fresh concrete without impairing the properties of this concrete if its water content takes into account the amount of water contained in the slurry.

The preferred stabilizers are phosphonic acid derivatives, more preferably those containing hydroxy and amino groups, which are capable of acting as calcium chelating agents. Particularly preferred stabilizers of this type are compounds of Dequest (R.T.M.) series, sold by Monsanto Co. (St. Louis. Mo.), in particular :
- Dequest 2000 :: Aminotri(methylenephosphonic acid)
- Dequest 2006 :: Aminotri(methylenephosphonic acid), pentasodium salt
- Dequest 2010 :: 1-Hydroxyethylidene-1,1-diphosphonic acid
- Dequest 2016 :: 1-Hydroxyethylidene-1,1-diphosphonic acid, tetrasodium salt.
- Dequest 2041:: Ethylenediaminetetra(methylenephosphonic acid)
- Dequest 2047:: Ethylenediaminetetra(methylenephosphonic acid), calcium sodium salt
- Dequest 2051 :: Hexamethylenediaminetetra(methylenephosphonic acid)
- Dequest 2054 :: Hexamethylenediaminetetra(methylenephosphonic acid), potassium salt.
- Dequest 2060 :: Diethylenetriaminepenta(methylenephosphonic acid)
- Dequest 2066 :: Diethylenetriaminepenta(methylenephosphonic acid), sodium salt.

Other suitable stabilizers include hydroxycarboxylic acids and their salts, including citric, gluconic, tartaric, fumaric, itaconic, malonic and glucoheptanoic acids ; polycarboxylic acids and their salts, e.g., polymaleic, polyfumaric, polyacrylic and polymethacrylic acids, preferably of low molecular weight ; antioxidants e.g., ascorbic acid, isoascorbic acid ; polymers e.g., sulphonic acid ― acrylic acid copolymers, polyhydroxysilanes and polyacrylamide, preferably of low molecular weight ; carbohydrates, e.g., sucrose and corn syrup ; and lignosulphonates, e.g., calcium lignosulphonates. Of these, the hydroxycarboxylic acids, polycarboxylic acids, ascorbic acid, isoascorbic acid, carbohydrates and polyhydroxysilanes are preferred. The preferred hydroxycarboxylic acids are gluconic acid and glucoheptanic acid.

More preferred stabilizers are mixtures of at least one retarder of the phosphonic acid type with at least one stabilizer of a different type. As many of the non-phosphonic acid stabilizers e.g., citric acid also have water-reducing properties, these may also have the effect of increasing the compressive strength of the final set concrete.

Particularly preferred stabilizers are mixtures of products of the Dequest series with citric acid, particularly Dequest 2000/citric acid. Preferred ratios of Dequest to citric acid are from 1 : 1 to 2 : 1.

A preferred stabilizing formulation (S) of this invention is :
116 g/liter of [Aminotri(methylenephosphonic acid)]
72.6 g/liter of citric acid
which may be added for example as 1.25 liter of solution to 226 liter of slurry-water.

A number of beneficial effects may be attributed to the method of this invention :
1. it eliminates the need for washing out concrete residue from a ready-mix truck drum.
2. it eliminates the need for slurry pits.
3. it reduces the time normally taken for truck drum washout.
4. it keeps truck drums cleaner by preventing concrete residue build-up.
5. the compressive strengths of the resultant concrete will be equal to or greater than freshly batched concrete.
6. it conserves water.
7. it has a major impact on solving the environmental issues raised by slurry pits and sludge disposal.

The quantities of stabilizer which must be added, as a percentage of the weight of the concrete, in the process of the invention will vary according to a number of different factors, which will readily be appreciated by the man skilled in the art. These include :
1) The formulation of the stabilizer used.
2) The length of time for which stabilisation is desired. This will normally be overnight (12-18 hours) or over a weekend (36-90 hours, preferably 60-72 hours).
3) The ASTM type of cement. While types I-IV can be used in the present process, types I and II are preferred.
4) The time of addition of the stabilizer to the concrete defined as the length of time between mixing the concrete and adding the stabilizer. The stabilizer may be added to the unused portion of the concrete as soon as the used portion has been placed, or may be added when the ready-mix truck returns to the mixing plant. Preferably the stabilizer is added to the cement within 1 to 4 hours after initial mixing. The longer the time of addition, the more stabilizer may be required.
5) The setting time of the original concrete. If the concrete has an intrinsically low rate of set, then less stabilizer will be required than for one with a higher rate of set.
6) The temperature of the concrete as a result of the ambient temperature. The higher the temperature, the faster the setting time and thus the larger the quantity of stabilizer which will be required. Because of the more rapid setting, it is preferred that for concrete temperatures above 20°C, the stabilizer should be added within 3 hours of initial mixing.
7) The volume of the concrete originally mixed in the truck drum. A large volume of concrete at a given initial temperature will set more rapidly than a small volume at the same initial temperature. This is because the large volume cannot lose the heat of hydration so quickly and therefore gives a greater temperature rise and thus a higher rate of set. Hence, for example, two cubic meters of concrete may require more than twice as much stabilizer as does one cubic meter.
8) The proportion of slurry to fresh concrete in the final mix.
9) The types and amounts of the admixtures in the original and in the freshly added cement.

In general, for the usual amounts of concrete residues left in the normal type of Ready-Mix truck drums the amount of water required to obtain a slurry will be from 100 to 600, preferably 200 to 400 liters and, if the preferred stabilizing formulation (S) is used, 1 liter of this for an overnight (24 to 48 hours) stabilizer treatment and 1.5 to 2 liters for a weekend (up to 72 hours) stabilizer treatment have to be added per truck. If a diluted solution is used for the one step process, corresponding amounts of stabilizer and water are mixed together.

In a preferred method of operating the process of the invention, when a ready-mix truck returns to a mixing plant empty of any returned concrete, the required amount of water is added to the concrete residue in the truck drum. The concrete residue slurry-water is backed up to the rear of the drum and the required amount of stabilizer composition is added to the slurry. The stabilized slurry-water is returned to the front of the drum, and the drum is run at high speed for one minute.

The stabilized slurry-water is again backed up to the rear of the drum for additional drum-fin cleaning. The stabilized slurry-water is again returned to the front of the drum, and the drum run at high speed for an additional one minute.

The following day, or after a weekend, freshly batched concrete is added to the drum and mixed normally. The amount of water used to batch the fresh concrete is reduced by the amount of water used to make the slurry-water.

To determine the effect of the stabilizer compositions of this invention on the compressive strength of concrete the following study was run.

A ready-mix truck was emptied of concrete and 100 liters of water plus 1 liter of stabilizer composition (S) was added to the truck drum to form a slurry, The stabilized slurry-water was treated as described above. The stabilized slurry-water was maintained overnight in the truck drum.

The next day 10.5 m³ of concrete was added to the drum and mixed with the stabilized slurry-water in the drum. The concrete cement factor was :
200 kg/m³ Type I cement and
40 kg/m³ fly ash.

Compressive strength data on the concrete was :

| | |
|---|---|
| 6 day compressive strength | 14.0 MPa |
| 6 day compressive strength | 13.2 MPa |
| 6 day compressive strength (average) | 13.6 MPa |
| 28 day compressive strength | 21.4 MPa |
| 28 day compressive strength | 22.2 MPa |
| 28 day compressive strength (average) | 21.8 MPa |

Reference Compressive Strength for concrete not treated by the invention process was :

| | |
|---|---|
| 7 day compressive strength | 15.0 MPa |
| 28 day compressive strength | 22.0 MPa |

These reference strengths are based on the prior 3-months compressive strength averages.

This study shows that the stabilizing compositions of this invention have no adverse effect on the compressive strength of treated concrete.

### EXAMPLE

A 56.6 liter mixer was filled with 0.02 m³ of concrete and thoroughly mixed. The concrete was emptied from the mixer and 2.27 liter of water and 0.03 liter of stabilizer composition (S) was added to the concrete residue in the mixer. The resultant slurry was mixed in a manner analogous to the description above. The stabilized slurry-water was allowed to sit overnight.

The next day 0.02 m³ of concrete was added to the stabilized slurry-water and thoroughly mixed.

Compressive strength data of the concrete is as follows :

| Trial | Formula | Slump | Initial | | | Compressive Strength/Percent | | |
|---|---|---|---|---|---|---|---|---|
| | | | Air | Set | W/C | 1 Day | 7 Day | 28 Day |
| 0 | Plain | 11,43 cm (4.50 inches) | 1.1 | 5.125 | .567 | 76,44 (1087) | 259,29 (3687) | 450,29 (6403) |
| | | | | | | 100 | 100 | 100 |
| 1 | Stabilized Slurry | 11,43 cm (4.50 inches) | 1.2 | 5.250 | .569 | 82,35 (1171) | 269,84 (3837) | 465,2 (6615) |
| | | | | | | 108 | 104 | 103 |

- Slump: - The drop in cm of a 30,5 cm (12 inch) cone. ASTM C-143
- Air: - The percentage of entrained air.
- Compressive Strength: - Kilos per square cm (pounds per square inch) of compressive strength of a concrete sample (11,6 cm x 11,6 cm = 4" x 4" cube).
The percent is the percent of increase or decrease of breaking strength based on the plain mix at 100 %.
- W/C: - Water to cement ratio.

The results show no adverse effect of the compositions of this invention on the compressive strength of the resulting concrete mixes.

## Claims

1. A process for the recuperation and reuse of unused concrete residues in a ready-mix truck drum, comprising the addition thereto of clean-up water to form a slurry, there being added to the drum, either directly or in the form of a solution in the clean-up water, a stabilizing agent.

2. A process according to Claim 1 wherein the stabilizing agent comprises at least one phosphonic acid derivative.

3. A process according to Claim 2 wherein the stabilizing agent is selected from the group consisting of:
Aminotri(methylenephosphonic acid)
Aminotri(methylenephosphonic acid), pentasodium salt
1-Hydroxyethylidene-1,1-diphosphonic acid
1-Hydroxyethylidene-1,1-diphosphonic acid, tetrasodium salt
Ethylenediaminetetra(methylenephosphonic acid)
Ethylenediaminetetra(methylenephosphonic acid), calcium sodium salt
Hexamethylenediaminetetra(methylenephosphonic acid)
Hexamethylenediaminetetra(methylenephosphonic acid), potassium salt
Diethylenetriaminepenta(methylenephosphonic acid)
Diethylenetriaminepenta(methylenephosphonic acid), sodium salt.

4. A process according to Claim 1 wherein the stabilizer comprises at least one compound selected from hydroxycarboxylic, polycarboxylic acids and their salts; ascorbic, isoascorbic acids; sulphonic acid - acrylic acid copolymers; polyhydroxysilanes;
polyacrylamide; carbohydrates and lignosulphonates.

5. A process according to Claim 4 wherein the stabilizer comprises at least one compound selected from hydroxycarboxylic acids, polycarboxylic acids, ascorbic acid, isoascorbic acid, corn syrup and polyhydroxysilanes.

6. A process according to Claim 1 wherein the stabilizer comprises
- at least one compound selected from a phosphonic acid derivative and,
- at least one compound selected from the group consisting of hydroxycarboxylic, polycarboxylic acids and their salts; ascorbic and isoascorbic acids; sulphonic acid - acrylic acid copolymers; polyhydroxysilanes; polyacrylamide; carbohydrates; and lignosulfonates.

7. A process according to Claim 6, in which the stabilizer consists of aminotri(methylenephosphonic acid) and citric acid.

8. A process according to Claim 4 wherein the hydroxycarboxylic acid is gluconic acid or glucoheptanic acid.

9. A process according to claim 1, wherein fresh concrete is added to the stabilized slurry.

## Patentansprüche

1. Ein Verfahren zur Wiedergewinnung und Wiederverwendung von unbenutzten Betonrückständen in einer Drehtrommel eines Fertigbeton-Lastwagens durch Zugabe von Waschwasser um eine Aufschlämmung zu bilden, indem ein Stabilisierungsmittel entweder direkt oder in Form einer Lösung im Waschwasser in die Drehtrommel gegeben wird.

2. Ein Verfahren gemäss Patentanspruch 1, worin das Stabilisierungsmittel zumindest ein Phosphonsäurederivat enthält.

3. Ein Verfahren gemäss Patentanspruch 2, worin das Stabilisierungsmittel aus der Gruppe ausgewählt wird, bestehend aus: Aminotri(methylenphosphonsäure)
Aminotri(methylenphosphonsäure), pentanatriumsalz
1-Hydroxyäthyliden-1,1-diphosphonsäure
1-Hydroxyäthyliden-1,1-diphosphonsäure, tetranatriumsalz
Aethylendiamintetra(methylenphosphonsäure)
Aethylendiamintetra(methylenphosphonsäure), calcium/natriumsalz
Hexamethylendiamintetra(methylenphosphonsäure)
Hexamethylendiamintetra(methylenphosphonsäure), kaliumsalz
Diäthylentriaminpenta(methylenphosphonsäure)
Diäthylentriaminpenta(methylenphosphonsäure), natriumsalz.

4. Ein Verfahren gemäss Patentanspruch 1, worin das Stabilisierungsmittel zumindest eine Verbindung aus der Gruppe Hydroxycarbonsäuren und Polycarbonsäuren bzw. deren Salze, Ascorbin- bzw. Isoascorbinsäure, Sulfonsäure-Acrylsäure-Copolymere, Polyhydroxysilane, Polyacrylamid, Kohlenhydrate und Ligninsulfonate enthält.

5. Ein Verfahren gemäss Anspruch 4, worin das Stabilisierungsmittel zumindest eine Verbindung aus der Gruppe Hydroxycarbonsäuren, Polycarbonsäuren, Ascorbinsäure, Isoascorbinsäure, Maissirup und Polyhydroxysilane enthält.

6. Ein Verfahren gemäss Patentanspruch 1, worin das Stabilisierungsmittel
- zumindest eine Verbindung aus der Gruppe der Phosphonsäurederivate, und
- zumindest eine Verbindung aus der Gruppe Hydroxycarbonsäuren und Polycarbonsäuren bzw. deren Salze, Ascorbin- bzw. Isoascorbinsäure, Sulfonsäure-Acrylsäure-Copolymere, Polyhydroxysilane, Polyacryl amid, Kohlenhydrate und Lignisulfonate enthält.

7. Ein Verfahren gemäss Patentanspruch 6, worin das Stabilisierungsmittel aus Aminotri(methylenphosphonsäure) und Zitronensäure besteht.

8. Ein Verfahren gemäss Patentanspruch 4, worin die Hydroxycarbonsäure Glukonsäure oder Glukoheptansäure ist.

9. Ein Verfahren gemäss Patentanspruch 1, worin eine frische Betonmischung zur stabilisierten Aufschlämmung gegeben wird.

## Revendications

1. Un procédé pour la récupération et la réutilisation des résidus de béton non utilisés dans un camion malaxeur pour béton prêt à l'emploi, comprenant l'addition audit camion malaxeur d'eau de lavage pour former une bouillie, un agent stabilisant étant ajouté dans le malaxeur soit directement, soit sous forme d'une solution dans l'eau de lavage.

2. Un procédé selon la revendication 1, dans lequel l'agent stabilisant comprend au moins un dérivé de l'acide phosphonique.

3. Un procédé selon la revendication 2, dans lequel l'agent stabilisant est choisi dans le groupe constitué par:
- l'acide aminotri(méthylènephosphonique)
- le sel pentasodique de l'acide aminotri(méthylènephosphonique)
- l'acide 1-hydroxyéthylidène-1,1-diphosphonique
- le sel tétrasodique de l'acide 1-hydroxyéthylidène-1,1-diphosphonique
- l'acide éthylènediaminetétra(méthylènephosphonique)
- le sel de calcium et de sodium de l'acide éthylènediaminetétra(méthylènephosphonique)
- l'acide hexaméthylènediaminetétra(méthylènephosphonique)
- le sel de potassium de l'acide hexaméthylènediaminetétra(méthylènephosphonique)
- l'acide diéthylènetriaminepenta(méthylènephosphonique)
- le sel de sodium de l'acide diéthylènetriaminepenta(méthylènephosphonique).

4. Un procédé selon la revendication 1, dans lequel le stabilisant comprend au moins un composé choisi parmi les acides hydroxycarboxyliques et les acides polycarboxyliques et leurs sels, les acides ascorbique et isoascorbique, les copolymères acide sulfonique - acide acrylique, les polyhydroxysilanes, le polyacrylamide, les hydrates de carbone et les ligninesulfonates.

5. Un procédé selon la revendication 4, dans lequel le stabilisant comprend au moins un composé choisi parmi les acides hydroxycarboxyliques, les acides polycarboxyliques, l'acide ascorbique, l'acide iso-ascorbique, le sirop de maïs et les polyhydroxysilanes.

6. Un procédé selon la revendication 1, dans lequel le stabilisant comprend
- au moins un composé choisi parmi les dérivés de l'acide phosphonique et
- au moins un composé choisi dans le groupe constitué par les acides hydroxycarboxyliques et les acides polycarboxyliques et leurs sels, les acides ascorbique et iso-ascorbique, les copolymères acide sulfonique - acide acrylique, les polyhydroxysilanes, le polyacrylamide, les hydrates de carbone et les lignine-sulfonates.

7. Un procédé selon la revendication 6, dans lequel le stabilisant est constitué par de l'acide aminotri(méthylènephosphonique) et de l'acide citrique.

8. Un procédé selon la revendication 4, dans lequel l'acide hydroxycarboxylique est l'acide gluconique ou l'acide glucoheptonique.

9. Un procédé selon la revendication 1, dans lequel du béton frais est ajouté à la bouillie stabilisée.
